## Europäisches Patentamt

## European Patent Office

## Office européen des brevets

(19)

(11) Veröffentlichungsnummer: **0 074 416**
**B1**

(12)

# EUROPÄISCHE PATENTSCHRIFT

(45) Veröffentlichungstag der Patentschrift:
**29.01.86**

(51) Int. Cl.⁴: **G 01 M 1/22**

(21) Anmeldenummer: **81107132.3**

(22) Anmeldetag: **10.09.81**

(54) Verfahren zum Übertragen einer gemessenen Unwuchtwinkellage auf einen Rotor und Vorrichtung hierzu.

(43) Veröffentlichungstag der Anmeldung:
**23.03.83 Patentblatt 83/12**

(45) Bekanntmachung des Hinweises auf die Patenterteilung:
**29.01.86 Patentblatt 86/5**

(84) Benannte Vertragsstaaten:
**DE FR GB IT**

(56) Entgegenhaltungen:
**EP - A - 0 045 505**
**DE - A - 2 548 729**

(73) Patentinhaber: **CARL SCHENCK AG,
Landwehrstrasse 55 Postfach 40 18, D-6100 Darmstadt
(DE)**

(72) Erfinder: **Giers, Alfred, Messeler Weg 12,
D-6101 Rossdorf 1 (DE)**

(74) Vertreter: **Dallhammer, Herbert, Dipl.-Ing., CARL
SCHENCK AG Patentabteilung
Postfach 4018 Landwehrstrasse 55, D-6100 Darmstadt
(DE)**

## Beschreibung

Die Erfindung betrifft ein Verfahren nach dem Oberbegriff des Anspruchs 1 und eine Auswuchtmaschine zur Durchführung dieses Verfahrens gemäss Oberbegriff des Anspruchs 4.

Durch die DE-A- 25 48 729 ist ein Verfahren zur Ermittlung und Anzeige der Winkellage der Unwucht bei Auswuchtmaschinen mit Winkelanzeige, insbesondere bei gelenkwellenlosem Antrieb des auszuwuchtenden Körpers bekannt geworden, das sich dadurch auszeichnet, dass der Unwuchtwinkel in Längseinheiten oder in dimensionslosen Einheiten, die jeweils auf einen Umfang oder eine charakteristische Teilung des auszuwuchtenden Körpers beziehbar sind und einen Bereich von 360° erfassen, umgewandelt und/ oder in solchen Einheiten angezeigt wird. Auch ist eine Einrichtung hierzu bekannt geworden, die sich auszeichnet, durch Mittel zur Umformung des gemessenen Winkelwertes durch mindestens eine Rechengrösse und/oder eine Anzeigeeinrichtung für Längeneinheiten und/oder dimensionslose Einheiten. Es wird hierbei aus einem ersten ein Mass für den Umfang des Rotors in der Ausgleichsebene in dimensionslosen Einheiten darstellenden Zahlenwert Z max sowie aus der ermittelten Winkellage $\varphi$ ein zweiter Zahlenwert gebildet, der die Lage der Unwucht bezüglich der Referenzposition in den genannten Einheiten wiedergibt, d.h.

$$\frac{\varphi^{\circ}}{360^{\circ}} \times Z\,max.$$

Hiermit wird auf dem Gebiet des Auswuchtens die Übertragung von gemessenen Unwuchtwinkeln auf einen auszugleichenden Rotor dadurch ermöglicht, dass der Unwuchtwinkel umgewandelt wird in ein Längenmass, welches von einem am untersuchten Körper angeordneten Nullpunkt beginnend am Umfang des Körpers angelegt mit seinem Endpunkt die Unwuchtwinkellage markiert, an der dann ein entsprechender Unwuchtausgleich stattfinden kann. Auch ist es möglich, wie in dieser Offenlegungsschrift offenbart, ein Zahlenband an den Rotationskörper anzulegen und dieses Zahlenband, wenn es in einem Verhältnis zu einer bestimmten Nullstelle des Rotationskörpers steht mit Hilfe des angezeigten Übertragungswertes zur Auffindung der Unwuchtwinkellage heranzuziehen.

Damit lässt sich bei Körpern, die an ihrem Umfang von der Fertigung her bereits Markierungen tragen oder die mit einem Zahlenband versehen werden, der angezeigte Unwuchtwinkel auf den Körper übertragen. Die genannte Offenlegungsschrift offenbart auch anstelle eines am zu untersuchenden Körpers anzubringenden Zahlenbandes den Unwuchtwinkel auch an einer Tragrolle zu ermitteln, da diese in einem bestimmten Verhältnis zum Lagerzapfen des auszuwuchtenden Körpers steht. Hierzu ist es allerdings ebenfalls erforderlich, an der Tragrolle eine Winkelskala anzubringen.

Die Vorbereitung des Wuchtkörpers selbst, beispielsweise durch Anlegen eines Zahlenbandes, welches in Übereinstimmung mit einer am auszuwuchtenden Körper anzubringenden Nullmarke gebracht werden muss, oder das Anbringen einer Winkelskala auf einer Tragrolle für den auszuwuchtenden Rotor, die im allgemeinen nur schwer zugänglich ist und darüber hinaus nicht immer fehlerfrei abgelesen werden kann, erfordern einen beachtlichen Zeitaufwand, insbesondere dann, wenn es sich um Rotationskörper mit verschiedenem Durchmesser des Rotationskörpers selbst oder des Zapfens des Rotationskörpers handelt. Auch ist in diesem Fall stets ein erneutes Einstellen des Verhältnisses zwischen dem Radius der Tragrolle und dem Radius des Zapfens, was zu einer neuen Anzeigenskala führt, an der dann der Unwuchtwinkel zunächst abgelesen werden muss und anschliessend auf den Rotationskörper übertragen werden muss, erforderlich. Es lassen sich durch die mehreren manuellen Tätigkeiten des Ablesens und Abmessens Fehler in der Genauigkeit der Übertragung des Unwuchtwinkels auf den zu untersuchenden Körper nicht vermeiden.

In der zum Stand der Technik gemäss Art. 54/3) EPÜ gehörenden EP-A-00 45 505 wird eine Einrichtung zur automatischen Auffindung der Unwuchtwinkellage eines Rotors und dem gleichzeitigen positionierten Anhalten dieser Lage in einer vorbestimmten Winkelposition beschrieben, wobei diese Einrichtung folgendes enthält:

zwei Lager zur drehbaren Lagerung der Enden des zu prüfenden Körpers; einen Antriebsmotor mit Motorkontrolleinrichtungen; Mittel zur Antriebsübertragung zwischen Motor und gelagertem Körper; Schwingungsaufnehmer, die mit mindestens einem Lager verbunden sind und pro Umdrehung die Schwingungsbewegung oder die Krafteinwirkung aufnehmen, die als Schwingungssignal der dynamischen Unwucht des Rotors entsprechen; eine Pulsformerschaltung um einen Phasenbezug des Schwingungssignals zu einer Referenzwinkellage herzustellen; einen Pulsgenerator, um Winkelimpulse mit vorgegebenem Abstand zur Bestimmung der Rotation des Körpers abzugeben; einen voreinstellbaren Zähler, in dem eine Zahl $\frac{(2n \times \varphi + \alpha)}{a}$ voreingestellt wird, wobei n die Messdrehzahl des Rotors, $\alpha$ der Winkel zwischen der vorbestimmten Stopwinkellage und der Referenzlage ist und a der Impulsabstand ist; Mittel zur Erzeugung eines Bremssignals, welches den Motorkontrollmitteln zur Bremsung des Motors zugeführt wird; Mittel, die verbunden sind mit der Pulsformerschaltung und Bremssignalerzeugung und zur Übertragung der Winkelimpulse zum voreingestellten Zähler nach Erhalt des auf das Bremssignal folgenden Phasenbezugs und dass der voreingestellte Zähler ein Signal abgibt zum Abschalten des Antriebsmotors, wenn das Phasensignal die vorgegebene Zahl erreicht hat, wobei der Antriebsmotor augenblicklich abgebremst wird, so dass die unwuchtige Stelle des Rotors an der vorbestimmten Stelle zur Ruhe kommt.

Ausgehend von dem durch die DE-A-25 48 729 bekannt gewordenen Stand der Technik liegt der vorliegenden Erfindung die Aufgabe zugrunde, unter Vermeidung der geschilderten Schwierigkeiten eine genaue Winkelübertragung von Unwuchtwinkelwerten auf den Rotor selbst zu erreichen, ohne dass eine Zwangssynchronisation zwischen Rotor und Auswuchtmaschine erforderlich ist. Diese Aufgabe wird im Hinblick auf die Winkelübertragung durch die im Kennzeichen des Anspruchs 1 enthaltenden Merkmale gelöst. Zufolge des Abbildens des Umfangs des Rotors mittels einer Impulsserie abhängig von einer Marke am Rotor sind alle Fehler, die zufolge irgendwelcher Ungenauigkeiten beim Aufbringen von Zahlenbändern oder bei vorhandenen Markierungen am Körper selbst auftreten, ausgeschaltet und der Rotor ist nach dem Stillsetzen ohne Fehler eindrehbar. Der zu untersuchende Körper muss nicht erst zu einem mit Markierungen versehenen Körper, beispielsweise durch ein Zahlenband gerüstet werden. Auch ist es nicht erforderlich, wenn eine Tragrolle oder bei Verwendung eines Bandantriebes die Umlenkrolle oder der Antriebsmotor für den Bandantrieb als Träger für den Impulsgeber verwendet wird, diesen zusätzlich mit einer Markierung zu versehen.

Eine Ausgestaltung des erfindungsgemässen Verfahrens ist in Anspruch 2 definiert. Bei einer Überwachung der Abstände der Einzelimpulse voneinander ist gleichzeitig eine Überwachung im Hinblick auf die Abweichung zwischen dem tatsächlichen Umfang des Rotors und dem durch die Impulse dargestellten Umfang des Rotors möglich.

Eine noch weitere Ausgestaltung des erfinderischen Verfahrens wird in Anspruch 3 vorgeschlagen. Durch die Überwachung der Messdrehzahl und der Umläufe bis zum Stillstand des Rotors ist eine genaue Überwachung des Übertragungsvorganges gegeben.

Das erfindungsgemässe Verfahren wird mit Hilfe einer Auswuchtmaschine gemäss Anspruch 4 durchgeführt. Durch diese erfindungsgemässe Auswuchtmaschine ist es nicht mehr erforderlich, von den angezeigten Werten ausgehend, eine erneute Übertragung der Unwuchtwinkelwerte auf den Rotor manuell durchzuführen, sondern es kann die gespeicherte Impulszahl gleichzeitig zum Überwachen für das richtige Eindrehen des Rotors in die Unwuchtwinkellage dienen.

Durch die in Anspruch 5 unter Schutz gestellte Anordnung eines Umlaufzählers wird ein eindeutiges Eindrehen des Rotors ermöglicht.

Eine weitere Ausgestaltung der erfindungsgemässen Auswuchtmaschine wird durch Anspruch 6 vorgeschlagen. Durch die Wahl des Impulsabstandes wird in besonders einfacher Weise eine Anpassung an die geforderte Winkelauflösung ermöglicht.

Eine noch weitere Austestaltung wird mit Anspruch 7 definiert. Durch Einsatz eines Eindrehmotors zum Eindrehen des Rotors, so lange bis Gleichheit von Zählerstand und zweitem Zahlenwert signalisiert wird, wird ein fehlerfreies Eindrehen ermöglicht.

Eine noch weitere Ausgestaltung wird in Anspruch 8 angegeben. Durch diese Ausgestaltung wird auch der verbleibende Fehler bei der Übertragung des Unwuchtwinkels berücksichtigt, der somit beim Übertragen auf den zu untersuchenden Rotor mit beseitigt werden kann.

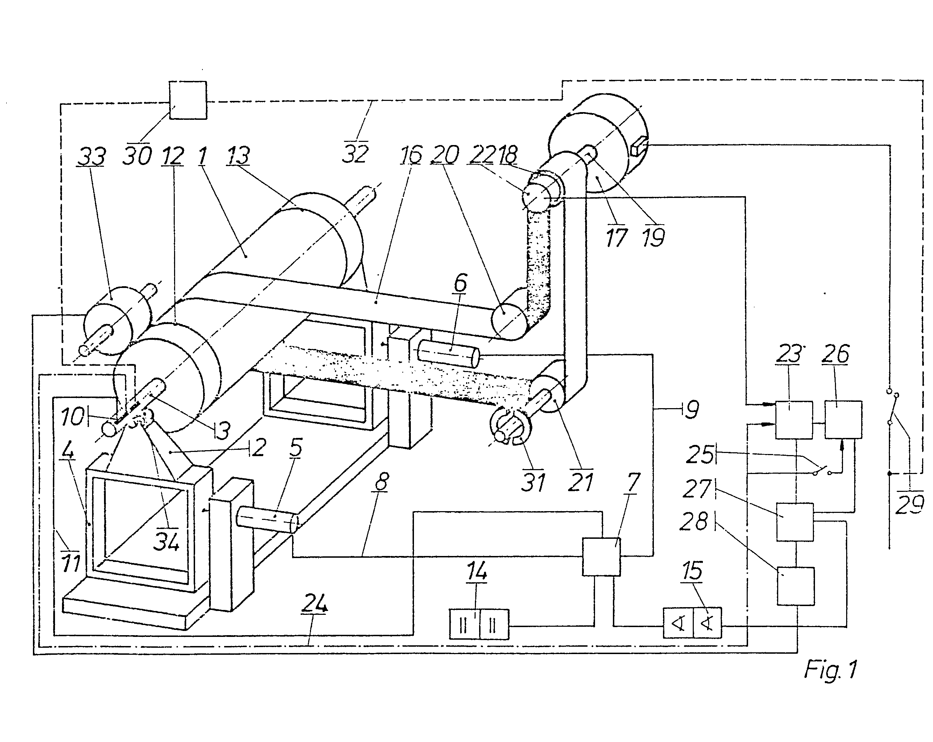

In der nachfolgenden Beschreibung wird anhand des in der Zeichnung dargestellten Ausführungsbeispiels die Erfindung näher erläutert.

Hierbei stellt die Figur eine Auswuchtmaschine mit Antrieb für den zu untersuchenden Rotor dar.

In der Figur ist ein zu untersuchender Rotor 1 in einer Auswuchtmaschine, die Tragrollenlagerungen 2 für Rotorzapfen 3 besitzt, rotierbar gelagert. Die Tragrollenlagerung 2 stützt sich auf einer Einheit 4 für jeden Rotorzapfen 3 ab. Messumformer 5, 6 wandeln die zufolge einer Unwucht auftretenden Schwingungen oder Kräfte an Einheiten 4 in elektrische Signale um. Gleichzeitig wird von einer charakteristischen Stelle des Rotors, im Ausführungsbeispiel einer Nut 10 am Rotorzapfen 3, ein weiteres Signal als Bezugssignal abgeleitet. Über Leitungen 8, 9 werden die Informationen der Messumformer einer Auswerteeinrichtung 7 beispielsweise einer Multipliziereinrichtung zugeführt, während über eine weitere Leitung 11 ein Bezugssignal der Multipliziereinrichtung ebenfalls zugeführt wird. Aus diesen Informationen wird in der Multipliziereinrichtung die Unwuchtgrösse und der Unwuchtwinkel für jede Ausgleichsebene 12, 13 bestimmt und in einem im Ausführungsbeispiel umschaltbaren Grössenmessgerät 14 und einem umschaltbaren Winkelmessgerät 15, für jede Ausgleichsebene getrennt, beispielsweise angezeigt.

Der zu untersuchende Rotor 1 wird von einem Band 16, welches den Rotor teilweise umschlingt, angetrieben (der Übersichtlichkeit halber wurde das Band um 90 Grad in die Horizontale verschwenkt). Das Band 16 wird von einem Antriebsmotor 17, der eine Antriebsscheibe 18 auf einer Welle 19 trägt, über eine Spannrolle 20 und eine Umlenkrolle 21 angetrieben. Mit der Antriebsscheibe 18 ist ein Impulsgeber 22 verbunden, wobei die Impulse selbst voneinander einen Winkelabstand besitzen, der kleiner als 3° ist, der je Umlauf der Antriebsscheibe 18 eine Impulsfolge an einen Zähler 23 weitergibt, in dem die Impulse gezählt werden. In Abhängigkeit der Nut 10 wird über eine Impulsleitung 24 die Zählung der Impulse im Zähler 23 beeinflusst, der bevorzugt als Vor- und Rückwärtszähler ausgebildet ist, und die über die Impulsleitung 24 kommende Information wird als Stop-Start-Information verwertet. Das heisst, bei jedem auftretenden Impuls wird die im Zähler 23 vorhandene Impulszahl einem Speicher 26 zugeführt, der Zähler 23 auf Null zurückgesetzt und erneut zur Zählung gestartet. Falls keine weitere Information, beispielsweise über die Beendigung des Messvorganges, an den Speicher 26 gelangt, wird bei dem nächsten Stop-Start-Impuls über die Impulsleitung 24 erneut der oben beschriebene Vorgang wiederholt.

Nach Beendigung des Messvorgangs wird ein Schalter 25 geöffnet und die im Speicher 26 vorhandene Impulszahl weiterverarbeitbar gespeichert.

Das Winkelmessgerät 15 und der Zähler 23 bzw. der Speicher 26 sind über eine Signalverarbeitungsschaltung 27 verbunden. In diese Signalverarbeitungsschaltung 27 wird nunmehr die analog oder digital vorliegende Information über den Unwuchtwinkel auf die Impulszahl im Speicher 26, die den Umfang des zu untersuchenden Rotors 1 an einer Ausgleichsstelle 12 bzw. 13 darstellt, bezogen. Während des Auslaufens des zu untersuchenden Rotors 1 wird fortlaufend der bezogene Unwuchtwinkel mit dem Inhalt des Zählers 23 verglichen. Dabei wird der Zähler 23 immer dann auf Null gesetzt, wenn sein Inhalt die gleiche Impulszahl besitzt, wie der Inhalt des Speichers 26. Bei Übereinstimmung beider Winkel steht der Rotor in der festgestellten Unwuchtwinkellage. Dabei kann anlagegemäss die Übereinstimmung durch einen Indikator 28, beispielsweise eine Signallampe, angezeigt werden. Anstelle der Signallampe können Differenzwinkelanzeige, Anzeige der Winkelstellung und deren optischer Vergleich treten.

Nach Beendigung des Messvorgangs wird weiterhin die Stromzufuhr zum Antriebsmotor 17 durch einen Ein-Aus-Schalter 29 unterbrochen. Mit dem Ausschalten des Antriebsmotors 17 wird gleichzeitig ein Umlaufzähler 30 geschaltet, der mit einer Bremsvorrichtung 31 zum Stillsetzen des zu untersuchenden Rotors 1 verbunden ist. Wird eine am Umlaufzähler 30 eingestellte Soll-Umlaufzahl für den Zeitraum zwischen Betätigung des Schalters 25 und Stillsetzen des zu untersuchenden Rotors 1 überschritten, so wird über eine Befehlsleitung 32 der Ein-Aus-Schalter 29 erneut eingeschaltet, der Antriebsmotor 17 mit Strom versorgt, so dass eine erneute Messung durchgeführt werden kann.

Gesteuert vom Indikator 28 für den Differenzwinkel des zu übertragenden Unwuchtwinkels wird ein Schrittmotor 33, der mit dem Umfang des zu untersuchenden Rotors in Wirkverbindung gebracht werden kann, den zu untersuchenden Rotor 1 solange weiterdrehen, bis die Anzeige des Indikators 28 Null ist und damit der zu untersuchende Rotor 1 zur Unwuchtbeseitigung entsprechend eingedreht, von einem nicht dargestellten Bearbeitungswerkzeug, arretiert, bearbeitet wird.

Anstelle des in der Figur dargestellten Bandantriebs kann auch ein Antrieb über Tragrollen 34 der Tragrollenlagerung 2 erfolgen, wobei in diesem Falle der Impulsgeber 22 dann in entsprechender Weise an der Tragrolle 34 angeordnet werden müsste. Auch können die Spannrolle 20 oder die Umlenkrolle 21 oder der Antriebsmotor 17 selbst als Träger für den Impulsgeber 22 dienen.

Die Erzeugung des Bezugssignals für die Bestimmung der Unwucht nach Grösse und Winkellage ist nicht auf die in der Figur dargestellte Abtastung einer Nut 10 am Rotorzapfen 3 eingeschränkt, es kann ebenso ein an der Mantelfläche des zu untersuchenden Rotors 1 vorhandenes Merkmal zur Erzeugung des Bezugssignals herangezogen werden. Dabei kann die Erzeugung dieses Signals mittels fotoelektrischer, magnetischer oder ähnlicher Abtastung gewonnen werden, wobei die Impulse selbst voneinander einen Winkelabstand besitzen, der kleiner als 3° ist.

Zum Zwecke der Berücksichtigung des unterschiedlichen Schlupfes beim Anfahren und Bremsen des zu untersuchenden Rotors 1 wird im Speicher 26 ein gewichteter Mittelwert aus der Impulszahl des Zählers 23 beim Anfahren und der Impulszahl des Zählers 23 beim Bremsvorgang gespeichert. Bei der Gewichtung werden bevorzugt die Unterschiede in der Grösse des Schlupfes beim Anfahren und Abbremsen berücksichtigt.

**Patentansprüche**

1. Verfahren zum Übertragen der gemessenen Winkellage der Unwucht eines auszuwuchtenden Rotors (1) auf dessen Umfang in einer Ausgleichsebene, bei dem
   - der Rotor (1) in einer Auswuchtmaschine, die keine mit dem Rotor synchron umlaufenden Teile aufweist, in Rotation versetzt und die Winkellage der Unwucht bezüglich einer auf dem Rotor festgelegten Referenzposition ermittelt wird,
   - aus einem ersten, ein Mass für den Umfang des Rotors in der Ausgleichsebene in dimensionslosen Einheiten darstellenden Zahlenwert sowie aus der ermittelten Winkellage ein zweiter Zahlenwert gebildet wird, der die Lage der Unwucht bezüglich der Referenzposition in den genannten Einheiten angibt, dadurch gekennzeichnet, dass
   - zur Ermittlung des ersten Zahlenwerts die von einem mit dem Rotor (1) gekoppelten Impulsgeber (22) erzeugten Impulse gezählt, die Zählung nach jeder Umdrehung mit Hilfe eines von der Referenzposition des Rotors abgeleiteten Stop-Start-Impulses beendet und erneut begonnen wird, und der jeweils bei Beendigung der Zählung nach einer Umdrehung vorliegende Zählwert festgehalten wird,
   - der Rotor nach dem Stillsetzen nachträglich noch soweit verdreht wird, bis die Anzahl der während dieser Verdrehung vom Impulsgeber (22) gelieferten Impulse gleich dem zweiten Zahlenwert ist.

2. Verfahren nach Anspruch 1, dadurch gekennzeichnet, dass der zeitliche Abstand der vom Impulsgeber (22) gelieferten Impulse überwacht wird.

3. Verfahren nach Anspruch 1 oder 2, dadurch gekennzeichnet, dass die Drehzahl des Rotors während der Ermittlung der Winkellage bis zum Stillsetzen überwacht wird.

4. Auswuchtmaschine zur Durchführung des Verfahrens nach Anspruch 1 mit
   - einer Rotorlagerung (2, 4),
   - einem Rotorantrieb (16–21), der keine syn-

7 **0 074 416** 8

chron mit dem auszuwuchtenden Rotor (1) umlaufenden Teile besitzt,

– Messumformern (5, 6) zur Erzeugung von den Einfluss der Unwucht auf die Rotorlagerung repräsentierenden Messignalen,

– einer Auswerteschaltung (7) zur Ermittlung der Winkellage der Unwucht bezüglich einer auf dem Rotor festgelegten Referenzposition anhand der Messignale,

– einer Signalverarbeitungsschaltung (27), die aus der ermittelten Winkellage und aus einem ersten, ein Mass für den Umfang des Rotors in der Ausgleichsebene in dimensionslosen Einheiten darstellenden Zahlenwerten einen zweiten Zahlenwert bildet, der die Lage der Unwucht bezüglich der Referenzposition in den genannten Einheiten angibt, und die diesen zweiten Zahlenwert speichert, gekennzeichnet durch

– einen mit dem auszuwuchtenden Rotor (1) gekoppelten Impulsgeber (22) zur Erzeugung einer dem Drehwinkel des Rotors proportionalen Zahl von Impulsen,

– einen Vorwärts-Rückwärts-Zähler (23), dessen Zähleingang die Impulse des Impulsgebers (22) zugeführt sind,

– einen Referenzpositionsgeber (10, 11, 24) zur Erzeugung eines nach jeder Umdrehung des Rotors auftretenden Referenzsignals anhand der Referenzposition, welches der Auswerteschaltung und dem Rücksetzeingang des Zählers zugeführt ist,

– einen mit dem Ausgang des Zählers verbundenen Speicher (26), der durch das Referenzsignal zur Übernahme des Zählerstandes jeweils nach einer Umdrehung des Rotors aktivierbar ist,

– eine in der Signalverarbeitungsschaltung (27) enthaltene Vergleichsschaltung zum Vergleich des gespeicherten zweiten Zahlenwertes mit dem Zählerstand des Zählers,

– einer an die Vergleicherschaltung angeschlossene Anzeigeeinheit (28) zur Signalisierung der Gleichheit von zweitem Zahlenwert und Zählerstand.

5. Auswuchtmaschine nach Anspruch 4, dadurch gekennzeichnet, dass ein Umlaufzähler (30) zum Zählen der Umläufe des Rotors nach Abschaltung des Rotorantriebs vorgesehen ist.

6. Auswuchtmaschine nach einem der vorhergehenden Ansprüche, dadurch gekennzeichnet, dass der Impulsgeber (22) so angeordnet und ausgebildet ist, dass die von ihm gelieferten Impulse im Abstand von weniger als drei Winkelgrad Drehung des Rotors auftreten.

7. Auswuchtmaschine nach einem der vorhergehenden Ansprüche, dadurch gekennzeichnet, dass ein Eindrehmotor (33) zum Eindrehen des Rotors nach dessen Stillsetzung in eine Position vorgesehen ist, in der die Anzeigeeinheit die Gleichheit von Zählerstand und zweitem Zahlenwert signalisiert.

8. Auswuchtmaschine nach einem der vorhergehenden Ansprüche, dadurch gekennzeichnet, dass eine Korrektureinheit zur Kompensation des Fehlers vorgesehen ist, der sich aus einem eventuellen Unterschied zwischen dem in den Speicher (26) übernommenen Zählerstand und dem tatsächlichen Umfang des Rotors in der Ausgleichsebene ergibt.

**Revendications**

1. Procédé pour reporter l'angle du balourd mesuré sur la circonférence d'un corps à rotation (1) dans un plan d'équilibre, dans lequel

– le corps à rotation (1) est mis en rotation dans une machine d'équilibrage qui ne présente aucune pièce tournant en synchronisme avec le corps à rotation et la position angulaire du balourd est déterminée par rapport à la position de référence marquée sur le corps à rotation,

– une seconde valeur numérique étant formée à partir d'une première valeur numérique représentant en unités abstraites une mesure de la périphérie du corps à rotation dans le plan d'équilibre ainsi qu'à partir de la position angulaire déterminée, valeur qui donne la position du balourd par rapport à la position de référence dans les unités mentionnées, caractérisé en ce que

– pour déterminer la première valeur numérique on compte les impulsions produites par un générateur d'impulsions (22) couplé au corps à rotation (1), le comtage se terminant après chaque tour à l'aide d'une impulsion d'arrêt-démarrage dérivée de la position de référence du corps à rotation et étant à nouveau recommencé, et la valeur numérique respectivement présente à la fin du comptage après un tour retenue,

– le corps à rotation, après son arrêt, est ensuite tourné jusqu'à ce que le nombre d'impulsions fournies pendant cette rotation par le générateur d'impulsions (22) soit égal à la seconde valeur numérique.

2. Procédé selon la revendication 1, caractérisé en ce que l'intervalle de temps entre les impulsions fournies par le générateur d'impulsions (22) est contrôlé.

3. Procédé selon la revendication 1 ou 2, caractérisé en ce que le nombre de tours du corps à rotation pendant la détermination de la position angulaire est contrôlé jusqu'à l'arrêt.

4. Machine d'équilibrage pour la mise en œuvre du procédé selon la revendication 1, comprenant:

– un support de corps à rotation (2, 4),

– un entraînement de corps à rotation (16–21) qui ne comporte aucune pièce tournant en synchronisme avec le corps à rotation (1) à équilibrer,

– des transducteurs de mesure (5, 6) pour produire des signaux de mesure représentant l'influence du balourd sur le support du corps à rotation,

– un circuit d'évaluation (7) pour déterminer la position angulaire du balourd par rapport à une position de référence sur le rotor, au moyen des signaux de mesure,

– un circuit de traitement de signaux (27) qui forme, à partir de la position angulaire déterminée et à partir d'une première valeur numérique représentant par des unités abstraites une mesure de la périphérie du corps à rotation dans le plan d'équilibre, une seconde valeur numérique qui donne la

5

position du balourd par rapport à la position de référence dans lesdites unités mentionnées, et qui met en mémoire cette seconde valeur numérique, caractérisée en ce qu'elle comprend:

- un générateur d'impulsions (22) couplé au corps à rotation (1) à équilibrer pour produire un nombre d'impulsions proportionnel à l'angle de rotation du rotor,
- un compteur-décompteur (23) à l'entrée de comptage duquel sont appliquées les impulsions du générateur d'impulsions (22),
- un générateur de position de référence (10, 11, 24) pour produire un signal de référence qui apparaît après chaque tour du corps à rotation au moyen de la position de référence, qui est appliqué au circuit d'évaluation et à l'entrée de remise à l'état initial du compteur,
- une mémoire (26) reliée à la sortie du compteur, qui peut être activée par le signal de référence pour transmettre l'état du compteur chaque fois après un tour du rotor,
- un circuit comparateur contenu dans le circuit de traitement de signaux (27) pour comparer la seconde valeur numérique en mémoire à l'état de comptage du compteur,
- une unité d'affichage (28) reliée au circuit comparateur pour signaler l'égalité entre la seconde valeur numérique et l'état de comptage du compteur,

5. Machine d'équilibrage selon la revendication 4, caractérisée en ce qu'elle comprend un compteur de tours (30) destiné à compter les tours du corps à rotation après la coupure de l'entraînement de ce corps à rotation.

6. Machine d'équilibrage selon l'une quelconque des revendications précédentes, caractérisée en ce que le générateur d'impulsions (22) est monté et constitué de manière que les impulsions qu'il fournit apparaissent à des intervalles de moins de trois degrés de rotation du corps à rotation.

7. Machine d'équilibrage selon l'une quelconque des revendications précédentes, caractérisée en ce qu'il est prévu un moteur de tournage (33) pour faire tourner le corps à rotation après son arrêt vers une position dans laquelle l'unité d'affichage signale l'égalité entre l'état du compteur et la seconde valeur numérique.

8. Machine d'équilibrage selon l'une quelconque des revendications précédentes, caractérisée en ce qu'il est prévu une unité de correction pour la compensation d'erreurs provenant d'une différence éventuelle entre l'état de comtage stocké dans la mémoire (26) et la périphérie effective du corps à rotation dans le plan d'équilibre.

## Claims

1. A method of transferring the measured angulared angular location of the unbalance of a rotor (1) to be balanced, to its circumference in a balancing plane, wherein

- the rotor (1) is set in rotation in a balancing machine which does not have any parts rotating in synchronism with the rotor and the angular location of the unbalance is determined with respect to a reference position defined on the rotor,
- a second numerical value, which indicates the location of the unbalance with respect to the reference position in non-dimensional units is formed from a first numerical value representing a measure of the circumference of the rotor in the balancing plane in the said units and from the determined angular location, characterised in that
- in order to determine the first numerical value, the pulses produced by a pulse generator (22) coupled to the rotor are counted, the counting is terminated and started afresh after each revolution by means of a stop-start pulse derived from the reference position on the rotor, and the count present in each case on termination of the counting after a revolution is retained,
- after the stoppage, the rotor is subsequently further turned until the number of pulses delivered by the pulse generator (22) during this turning is equal to the second numerical value.

2. A method as claimed in Claim 1, characterised in that the interval in time between the pulses delivered by the pulse generator (22) is monitored.

3. A method as claimed in Claim 1 or 2, characterised in that the speed of rotation of the rotor is monitored during the determination of the angular location until it stops.

4. A balancing machine for carrying out the method as claimed in Claim 1 having

- a rotor mounting (2, 4),
- a rotor drive (16–21) which does not have any parts rotating in synchronism with the rotor (1) to be balanced,
- measuring transducers (5, 6) to produce measured signals representing the influence of the unbalance on the rotor mounting,
- an evaluation circuit (7) to determine the angular location of the unbalance with respect to a fixed reference position on the rotor, with the aid of the measured signals,
- a signal processing circuit (27) which forms, from the angular location determined and from a first numerical value representing a measure of the circumference of the rotor in the balancing plane in non-dimensional units, a second numerical value which indicates the position of the unbalance with respect to the reference position in the said units and which stores this second numerical value, characterised by
- a pulse generator (22) coupled to the rotor (1) to be balanced to produce a number of pulses proportional to the angle of rotation of the rotor,
- an up-down counter (23), to the counting input of which the pulses of the pulse generator (22) are supplied,
- a reference-position indicator (10, 11, 24) to produce a reference signal appearing after each revolution of the rotor with the aid of the reference position, which signal is fed to the evaluation circuit and to the reset input of the counter,
- a store (26) which is connected to the output of the counter and which can be activated by the reference signal after each revolution of the rotor to take over the counter contents,

– a comparator circuit contained in the signal processing circuit (27) to compare the stored second numerical value with the contents of the counter,

– an indicator unit (28) connected to the comparator circuit to signal the equality of the second numerical value and the counter content.

5. A balancing machine as claimed in Claim 4, characterised in that a revolution counter (30) is provided to count the revolutions of the rotor after the rotor drive has been switched off.

6. A balancing machine as claimed in one of the preceding Claims, characterised in that the pulse generator (22) is so designed and constructed that the pulses delivered by it appear at intervals of less than three degrees of angle of rotation of the rotor.

7. A balancing machine as claimed in one of the preceding Claims, characterised in that a turning motor (33) is provided to turn the rotor, after its stopping, into a position in which the indicator unit signals the equality of counter content and second numerical value.

8. A balancing machine as claimed in one of the preceding Claims, characterised in that a correction unit is provided to compensate for the error which results from a possible difference between the counter contents transferred to the store (26) and the actual circumference of the rotor in the balancing plane.

1/1

Fig. 1